(19) **Europäisches Patentamt**

**European Patent Office**

**Office européen des brevets**

(11) **EP 0 917 299 B1**

(12) **FASCICULE DE BREVET EUROPEEN**

(45) Date de publication et mention
de la délivrance du brevet:
**22.12.2004   Bulletin 2004/52**

(51) Int Cl.⁷: $H04B\ 1/707$

(21) Numéro de dépôt: **98402607.0**

(22) Date de dépôt: **20.10.1998**

(54) **Transmission numérique à étalement de spectre par séquence directe avec génération d'un signal d'interférences**

Digitale Direktsequenzspreizspektrumnachrichtenübertragung mit Störsignalgeneration

Digital direct sequence spread spectrum transmission with interference signal generation

(84) Etats contractants désignés:
**DE GB IT**

(30) Priorité: **22.10.1997   FR 9713238**

(43) Date de publication de la demande:
**19.05.1999   Bulletin 1999/20**

(73) Titulaire: **COMMISSARIAT A L'ENERGIE ATOMIQUE**
**75015 Paris (FR)**

(72) Inventeurs:
• **Lattard, Didier**
**38680 Rencurel (FR)**
• **Lequepeys, Jean-René**
**38600 Fontaine (FR)**
• **Varreau, Didier**
**38450 Saint-Georges-de-Commiers (FR)**
• **Piaget, Bernard**
**38610 Venon (FR)**

(74) Mandataire: **Poulin, Gérard et al**
**Société BREVATOME**
**3, rue du Docteur Lancereaux**
**75008 Paris (FR)**

(56) Documents cités:
EP-A- 0 491 668          EP-A- 0 778 677
US-A- 5 553 062

## Description

### Domaine technique

La présente invention a pour objet un circuit pour transmissions numériques à étalement de spectre par séquence directe avec génération d'un signal d'interférences correspondant à un bruit d'accès multiple.

### Etat de la technique

La technique de modulation à étalement de spectre par séquence directe est utilisée depuis de nombreuses années, en particulier dans les radiocommunications avec les satellites et dans le domaine militaire.

Dans un émetteur de données numériques utilisant une technique de modulation classique, les données à émettre modulent une porteuse radio. La modulation employée peut être une modulation de phase, de fréquence ou d'amplitude ou une modulation mixte. Pour simplifier l'exposé, on se limitera aux modulations de phase, qui sont aujourd'hui les plus utilisées.

Les données numériques à transmettre sont des éléments binaires, ou bits. Ces bits ont une période $T_b$, c'est-à-dire que tous les $T_b$ il faut transmettre un nouveau bit. Avec ces bits, on peut constituer des groupes de bits, appelés encore symboles, dont la période est notée $T_s$ et est un multiple de $T_b$. Ce sont ces symboles qui vont moduler la porteuse radio, par exemple en phase.

Deux exemples de modulation de phase peuvent illustrer cette technique :

a) la modulation dite BPSK (pour "Binary Phase Shift Keying") ; elle consiste à affecter un état de phase, par exemple 0, aux bits 0, et un état de phase $\pi$ aux bits 1 ; dans ce cas, le symbole est le bit lui-même ($T_s=T_b$) et la porteuse radio voit son état de phase imposé tous les bits ;

b) la modulation dite QPSK (pour "Quaternary Phase Shift Keying") ; elle consiste à utiliser des symboles formés par deux bits successifs ; ces symboles peuvent donc prendre quatre états (00, 01, 10, 11) ; on affecte un état de la phase de la porteuse à chacun de ces états ; dans ce cas, $T_s=2T_b$ et la porteuse radio voit son état de phase imposé tous les deux bits.

Côté réception, il faut démoduler le signal reçu. On distingue deux grandes familles de démodulation : la démodulation cohérente et la démodulation non cohérente. La technique de démodulation cohérente consiste à réaliser, dans le récepteur, un sous-ensemble dont le rôle est d'estimer la phase moyenne de la porteuse, de manière à reconstituer une référence de phase. Cette référence de phase est ensuite mélangée avec le signal reçu pour démoduler les données.

La technique de démodulation non cohérente est fondée sur l'observation selon laquelle il suffit que la référence de phase du symbole en cours soit comparée à la phase du symbole précédent. Dans ce cas, le récepteur n'estime pas la phase des symboles mais la différence de phase entre deux symboles successifs. On se trouve alors en présence d'une modulation différentielle de phase DPSK ("Differential Phase Shift Keying") ou DQPSK ("Differential Quadrature Phase Shift Keying").

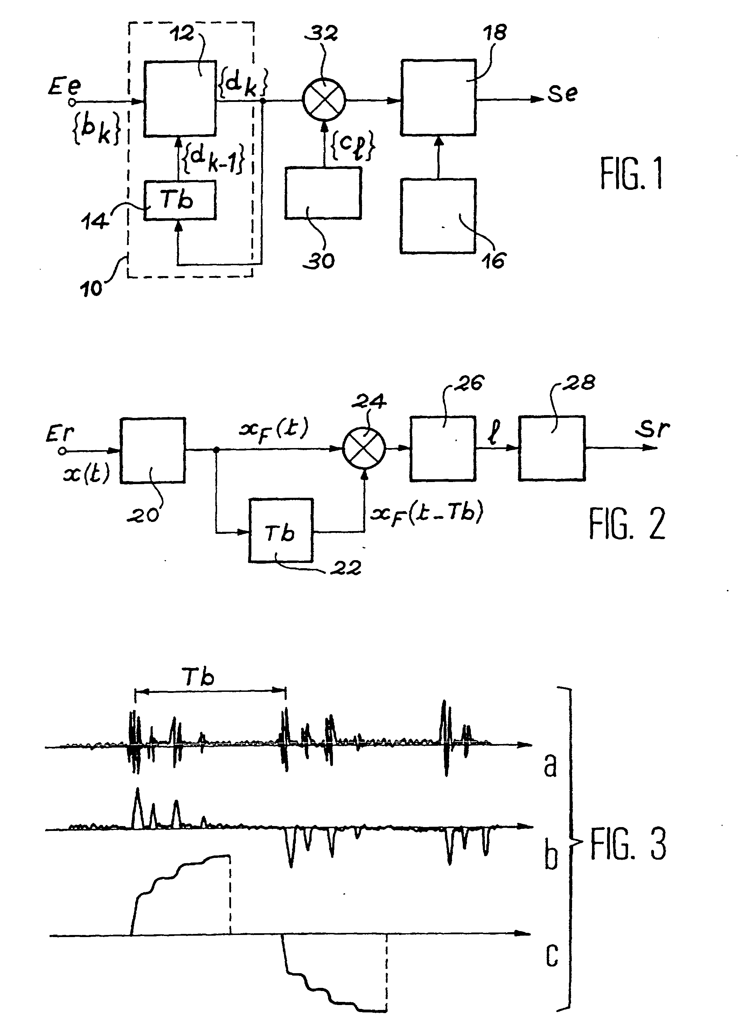

Les figures 1 à 3 annexées montrent schématiquement la structure et le fonctionnement d'un émetteur et d'un récepteur à étalement de spectre fonctionnant en DPSK. Cet état de la technique correspond au document FR-A-2 712 129.

La figure 1, tout d'abord, montre le schéma synoptique d'un émetteur. Cet émetteur possède une entrée Ee, qui reçoit les données $b_k$ à émettre et il comprend un codeur différentiel 10, composé d'un circuit logique 12 et d'un circuit à retard 14 ; l'émetteur comprend encore un générateur 30 de séquences pseudoaléatoires, un multiplieur 32, un oscillateur local 16 et un modulateur 18 relié à une sortie Se, qui délivre le signal DPSK.

Le circuit logique 12 reçoit les données binaires $b_k$ et délivre des données binaires $d_k$. Le circuit logique 12 reçoit également les données retardées d'un rang soit $d_{k-1}$. L'opération logique effectuée dans le circuit 12 est l'opération OU-exclusif sur les données $b_k$ et sur le complément de $d_k$ retardé (c'est-à-dire sur $\overline{d_{k-1}}$) :

$$d_k = b_k \oplus \overline{d_{k-1}}$$

La séquence pseudoaléatoire utilisée à l'émission pour moduler les données doit posséder une fonction d'autocorrélation présentant un pic marqué (de valeur N) pour un retard nul et des lobes secondaires le plus faible possible. Ceci peut être obtenu en utilisant des séquences de longueur maximale (appelées aussi m-séquences) ou des séquences dites de GOLD ou de KASAMI par exemple. Cette séquence pseudoaléatoire, notée $\{C_\ell\}$, possède un débit binaire N fois plus élevé que le débit des données binaires à transmettre. La durée $T_c$ d'un élément binaire de cette séquence pseudoaléatoire, élément appelé aussi "chip", est donc égale à $T_b/N$.

Le débit en "chips" de la séquence pseudoaléatoire peut être de plusieurs millions, voire de plusieurs dizaines de millions par seconde.

La figure 2 annexée montre le schéma synoptique d'un récepteur correspondant, du type démodulateur différentiel. Ce récepteur possède une entrée Er et comprend un filtre adapté 20, dont la réponse impulsionnelle est la renversée dans le temps de la séquence pseudoaléatoire utilisée dans l'émetteur, un circuit à retard d'une durée $T_b$ référencé 22, un multiplieur 24, un intégrateur 26 sur une période $T_b$ et un circuit logique de décision 28. Le récepteur possède une sortie Sr qui restitue les données.

Si l'on note x(t) le signal appliqué à l'entrée Er, le multiplieur 24 reçoit le signal filtré $x_F(t)$ et le signal filtré-retardé $x_F(t-T_b)$. Le produit est intégré sur une période inférieure ou égale à $T_b$ dans l'intégrateur 26, lequel délivre un signal dont la polarité permet de déterminer la valeur du bit transmis.

Le filtre d'entrée 20 utilisé dans le récepteur possède une réponse impulsionnelle équivalente en bande de base, notée H(t), et cette réponse doit être le complexe conjugué renversé dans le temps de la séquence pseudoaléatoire c(t) utilisée à l'émission:

$$H(t)=c*(T_b-t)$$

Le signal délivré par un tel filtre vaut donc :

$$x_F(t) = x(t) * H_F(t)$$

où le signe * désigne l'opération de convolution, soit

$$x_F(t) = \int_0^{T_b} x(s).c*(s-t)ds.$$

Le filtre adapté 20 réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel, la fréquence de répétition des impulsions étant égale à $1/T_b$. L'enveloppe de ce signal est la fonction d'autocorrélation du signal c(t). L'information est véhiculée par la différence de phase entre deux pics de corrélation successifs.

La sortie du multiplieur va donc être formée d'une succession de pics positifs ou négatifs, suivant la valeur du bit transmis.

Dans le cas d'une transmission radio en présence de trajets multiples, la sortie du filtre adapté va être formée d'une succession de pics de corrélation, chaque pic correspondant à un trajet de propagation.

Les différents signaux de la chaîne de réception sont représentés sur la figure 3. La ligne (a) représente le signal filtré $x_F(t)$ ; la ligne (b) le signal de corrélation $x_F(t)*x_F(t-T_b)$ ; la ligne (c) le signal à la sortie de l'intégrateur.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communications Series ;
- "Spread Spectrum Communications",par Marvin K. SIMON et al., vol. I, 1983, Computer Science Press ;
- "Spread Spectrum Systems", par R.C. DIXON, John WILEY and Sons.

Cette technique est également décrite dans certains articles :

- "Direct-sequence Spread Spectrum with DPSK Modulation and Diversity for Indoor Wireless Communications", publié par Mohsen KAVEHRAD et Bhaskar RAMAMURTHI dans la revue "IEEE Transactions on Communications", vol. COM 35, n°2, février 1987 ;
- Practical Surface Acoustice Wave Devices", par Melvin G. HOLLAND, dans la revue Proceedings of the IEEE, vol. 62, n°5, mai 1974, pp. 582-611.

Les avantages de la technique à étalement de spectre par séquence directe sont multiples. On peut citer, notamment :

- la discrétion : cette discrétion est liée à l'étalement de l'information transmise sur une large bande de fréquence ; il en résulte une faible densité spectrale de la puissance émise ;
- l'accès multiple : plusieurs liaisons à étalement de spectre par séquence directe peuvent partager la même bande de fréquence en utilisant des séquences pseudoaléatoires d'étalement orthogonales (séquences possédant une fonction d'intercorrélation qui présente du bruit résiduel très faible pour tous les décalages) ; cette technique porte le nom d'accès multiple à répartition par les codes (AMRC en abrégé ou CDMA en anglais) ;
- une bonne cohabitation avec les communications à bande étroite classique : en effet, la même bande de fréquence peut être partagée par les systèmes utilisant une modulation à bande étroite et ceux qui utilisent une modulation à large bande ; les communications à bande étroite ne voient qu'une légère augmentation du bruit radioélectrique ambiant, d'autant plus faible que la longueur de la séquence sera grande ; les communications à modulation à étalement de spectre opèrent une réjection des modulations à bande étroite grâce à l'opération de corrélation effectuée à la réception ;
- la difficulté d'interception : une transmission à étalement de spectre par séquence directe est difficile à intercepter en raison de la faible densité spectrale et du fait que le récepteur doit connaître la séquence d'étalement pour pouvoir démoduler les données ;
- un excellent comportement dans un environnement multi-trajet : dans ce type d'environnement, la propagation de l'onde radioélectrique s'effectue selon des trajets multiples qui mettent en jeu des phénomènes de réflexion, de diffraction et de diffusion ; en outre, il n'est pas rare qu'il n'y ait plus de trajet direct stable dans le temps entre l'émetteur et le récepteur ; cette propagation par trajets multiples induit des effets parasites qui tendent à dégrader la qualité de la transmission.

Les systèmes de transmission à accès multiple à répartition par les codes (AMRC) se heurtent à une difficulté, qui vient de l'interférence se produisant entre une voie de transmission utilisant un code d'étalement propre à un utilisateur particulier et les autres voies utilisant d'autres codes propres à d'autres utilisateurs. Si les séquences utilisées étaient rigoureusement orthogonales, ces interférences seraient inexistantes mais, dans la pratique, ce n'est pas le cas.

Si l'on désigne par $g_i(t)$ et $g_k(t)$ deux séquences pseudo-aléatoires affectées à des utilisateurs i et k, on peut définir un coefficient $\mu_{i,k}$ traduisant la corrélation entre ces deux séquences. Ce coefficient est égal à la moyenne, sur la durée Ts d'un symbole, du produit des séquences, soit :

$$\mu_{i,k} = \frac{1}{Ts}\int_0^{Ts} g_i(t).g_k(t)dt \ .$$

Ce coefficient représente une autocorrélation si i=k et une intercorrélation si i≠k.

Le signal à la sortie du corrélateur correspondant à l'utilisateur de rang k (c'est-à-dire la sortie du multiplieur 24 de la figure 2) peut s'écrire, en fonction de ce coefficient de couplage, :

$$A_k d_k + \sum_i \mu_{i,k} A_i d_i + \frac{1}{Ts}\int_0^{Ts} n(t).g_k(t).dt$$

où $A_k$ est l'amplitude du signal propre à l'utilisateur de rang k, $g_k(t)$ la séquence pseudo-aléatoire propre à cet utilisateur, $d_i$ la donnée transmise et n(t) un bruit blanc additif gaussien. Dans cette expression, l'indice i va de 0 à K, K étant le nombre total d'utilisateurs, mais sans prendre la valeur k propre à l'utilisateur considéré.

Le premier terme, soit $A_k d_k$, permet de retrouver la donnée $d_k$ ; le deuxième correspond à une corrélation avec les signaux correspondant aux autres utilisateurs. Ce terme est appelé "interférence d'accès multiple" ou IAM en abrégé (MAI en anglais pour "Multiple Access Interference"). Si les séquences sont choisies et construites pour avoir des intercorrélations faibles, les coefficients $\mu_{i,k}$ sont proches du zéro et l'effet de l'interférence sur le signal de l'utilisateur k avec les autres utilisateurs i reste faible.

L'existence de cette interférence d'accès multiple entraîne une conséquence non négligeable sur la capacité du système de transmission, c'est-à-dire sur le nombre d'utilisateurs simultanés acceptables, et sur les performances du système. De plus, la présence d'utilisateurs émettant un fort signal va augmenter l'effet de l'interférence d'accès multiple sur des utilisateurs émettant un signal faible. Les utilisateurs émettant faiblement pourront être complètement brouillés par des utilisateurs de plus forte puissance. Par exemple, dans des communications de multi-point à point, ce phénomène survient lorsque les émetteurs, émettant avec des amplitudes identiques, sont à des distances différentes du récepteur. Le signal de l'émetteur le plus proche arrivera au récepteur avec une amplitude plus forte que le signal émanant d'un émetteur plus lointain, compte-tenu des différences d'atténuation. Cet effet est connu sous le nom de "Near/Far Effect" en terminologie anglo-saxonne, ou aveuglement en bande de base.

De nombreux travaux ont été entrepris pour tenter de réduire ce phénomène d'interférence. On peut citer :

- des travaux sur les séquences d'étalement pseudo-aléatoires : cette approche vise à trouver un jeu de séquences possédant de bonnes propriétés d'orthogonalité ; dans le cas idéal où $\mu_{i,k}$=0 (pour i différent de k), les codes sont rigoureusement orthogonaux et le terme correspondant à l'interférence d'accès multiple est nul ; cependant, comme en pratique les systèmes de communications CDMA sont asynchrones, il est mathématiquement impossible de garantir cette orthogonalité pour des décalages temporels variables entre chaque utilisateur du système ; en pratique, on recherche donc des codes ayant entre eux les plus faibles coefficients d'intercorrélation ;
- des travaux sur la gestion des puissances : un contrôle strict de la puissance d'émission des différents utilisateurs du système vise à obtenir que les puissances reçues, au niveau du récepteur, soient identiques pour tous les codes du système CDMA ; cette gestion limite le "Near/Far Effect" ; cependant, du fait du phénomène d'atténuation et de variations rapides du canal radio, ce contrôle des puissance a ses limites ;
- la mise en oeuvre d'antennes adaptatives : l'idée est de pointer l'antenne dans la direction de l'utilisateur recherché ; l'effet de l'interférence d'accès multiple est alors réduit ;
- des travaux sur des structures de récepteur plus performantes fondées sur une détection multi-utilisateurs conjointe des données ; la seule hypothèse faite est que les codes du système sont connus du récepteur ; malheureusement, cette structure théorique est très complexe à mettre en oeuvre.

Les efforts de ces dernières années ont porté sur la recherche de solutions qui, pour n'être pas optimales, n'en apportent pas moins une nette amélioration des performances par rapport à celles d'un détecteur classique. Parmi ces solutions, on peut citer les récepteurs à suppression d'interférences. Deux types de récepteurs peuvent être distingués, selon qu'ils mettent en oeuvre une suppression successive ou une suppression parallèle des interférences. Ces deux types de récepteurs connus peuvent être décrits rapidement :

A) Un récepteur à suppression successive d'interférences comprend schématiquement :

- un récepteur du signal en bande de base,
- un premier étage utilisant sur un détecteur conventionnel,
- un circuit de sélection de l'utilisateur produisant la plus forte valeur de corrélation (utilisateur reçu avec la plus forte puissance),
- un décodage des informations liées à cet utilisateur pour restituer le symbole émis,
- une régénération du signal bande de base émis par cet utilisateur par étalement du symbole restitué à l'aide de la séquence d'étalement utilisée,
- une suppression du signal ainsi régénéré dans le signal en bande de base initial,
- une réitération de ce processus (avec le nouveau signal en bande de base obtenu) jusqu'au décodage du signal de plus faible puissance.

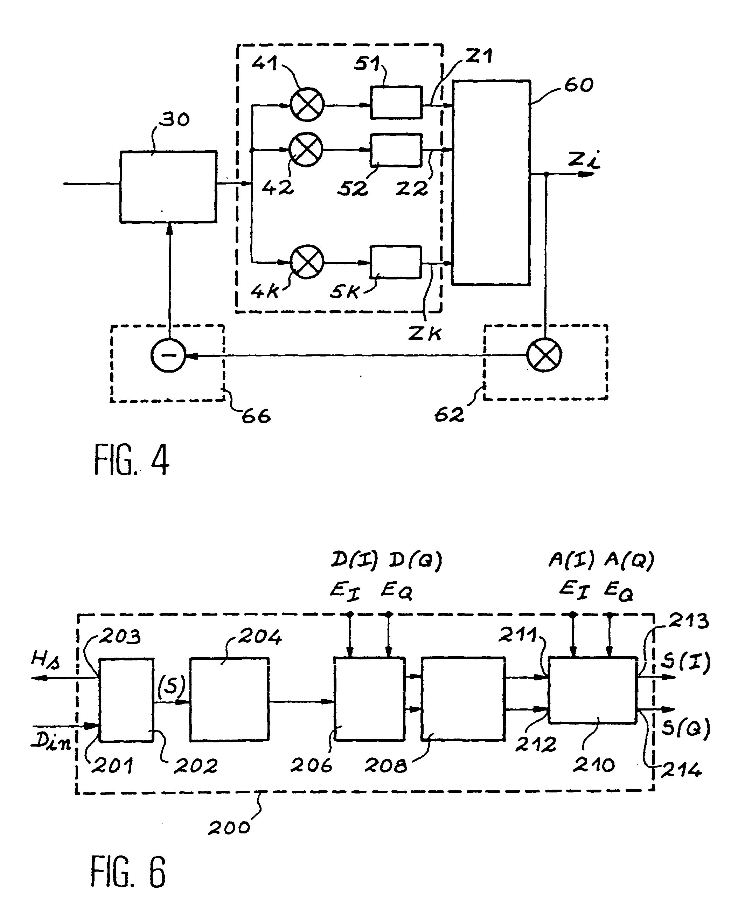

Une telle technique est décrite, par exemple, dans l'article de P. PATEL et al. intitulé "Analysis of a Simple Successive Interference Cancellation Scheme in a DS/CDMA System" publié dans "IEEE Journal on Selected Areas in Communications", vol. 12, n°5, June 1994, pp. 796-807. Le récepteur correspondant est illustré sur la figure 4 annexée. Il comprend un circuit 30 de réception en bande de base, un ensemble de corrélateurs 41, 42, ..., 4k, autant d'intégrateurs 51, 52, ..., 5k, un circuit 60 de sélection du maximum des signaux $Z_1$, $Z_2$, ...,$Z_k$, obtenus après intégration, soit $Z_i$, la donnée di correspondante étant obtenue par le signe de $Z_i$, un circuit 62 de régénération du signal en bande de base, ce circuit utilisant la séquence pseudo-aléatoire de l'utilisateur i pour réétaler la donnée di, un circuit inverseur 66 réinjectant le signal en bande de base ainsi obtenu dans le circuit de réception, pour y soustraire la part liée à l'utilisateur i.

Après ce premier traitement, le circuit détermine un nouveau maximum et effectue une nouvelle correction et ainsi de suite.

Ce processus de suppression d'interférences est bien adapté aux cas où les puissances relatives des divers utilisateurs ont des valeurs très différentes. En effet, dans ce cas, c'est l'utilisateur qui est reçu avec la plus forte puissance qui est le plus facile à décoder et c'est aussi celui qui perturbe le plus les autres utilisateurs.

Trois problèmes techniques majeurs restent cependant à résoudre pour pouvoir mettre en oeuvre cette technique. Il faut :

- sélectionner l'utilisateur de plus forte puissance,

- régénérer le signal d'interférence de cet utilisateur (amplitude, données, compte tenu des divers trajets de propagation),
- programmer les circuits de façon dynamique pour pouvoir effectuer les corrélations successives avec les séquences pseudo-aléatoire des utilisateurs non encore encodés.

Ce processus reste donc assez théorique et le circuit de la figure 4 ne semble pas avoir dépassé le stade de la simulation en laboratoire.

B) Pour ce qui est maintenant des récepteurs à suppression parallèle d'interférences, ils utilisent :

- un premier étage fondé sur un détecteur classique (banque de corrélateurs),
- une génération d'un signal d'interférence par chacun des utilisateurs du système,
- pour chacun des utilisateurs, la suppression dans le signal reçu de toutes les interférences engendrées par les autres utilisateurs du système,
- un deuxième étage de corrélateurs et d'estimation des données finales.

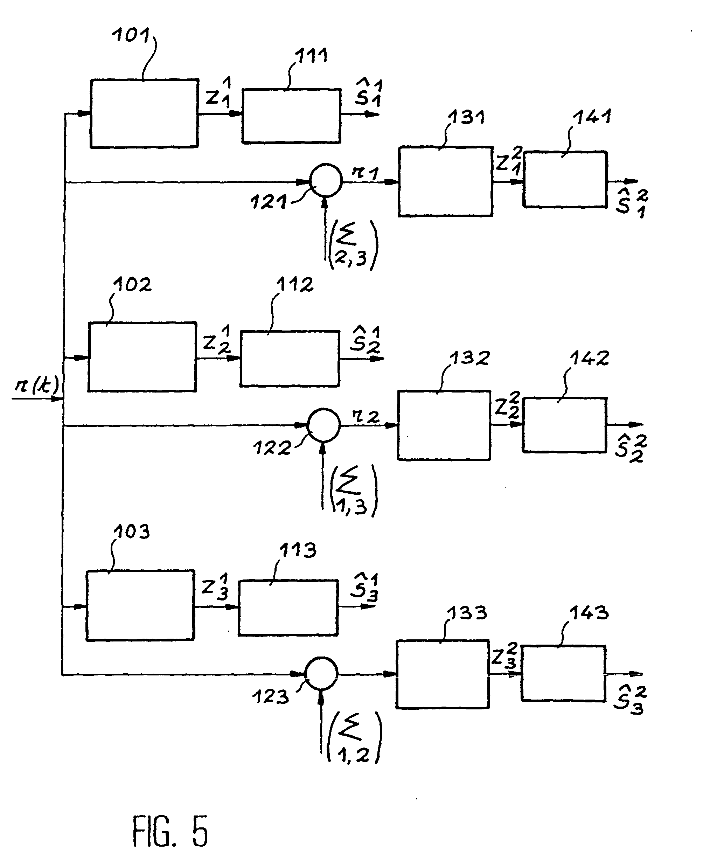

Une telle technique est décrite dans l'article de R.M. BUEHRER et al. intitulé "Analysis of DS-CDMA Parallel Interference Cancellation with Phase and Timing Errors" publié dans "IEEE Journal on Selected Areas in Communications", vol. 14, n°8, October 1996, pp. 1522-1535. Le récepteur correspondant est illustré sur la figure 5 annexée, dans le cas de trois utilisateurs. Le signal de réception r(t) est traité dans un premier étage constitué de trois corrélateurs 101, 102, 103 utilisant les trois codes pseudo-aléatoires des utilisateurs. Ces corrélateurs délivrent trois signaux de décision $Z_1^1$, $Z_2^1$, $Z_3^1$ qui sont traités dans trois circuits d'estimation 111, 112, 113. Ces derniers délivrent des signaux $s_1^1$, $s_2^1$, $s_3^1$ qui sont obtenus par étalement des signaux Z par les séquences pseudo-aléatoires des trois utilisateurs et par pondération en fonction des puissances respectives détectées. Pour chaque utilisateur, les signaux $s$ des autres utilisateurs sont sommés, soit respectivement

$$\sum_{2,3}$$

pour l'utilisateur 1,

$$\sum_{1,3}$$

pour l'utilisateur 2 et

$$\sum_{1,2}$$

pour l'utilisateur 3. Ces sommes sont soustraites du signal de réception r(t) dans un deuxième étage constitué par trois soustracteurs 121, 122, 123, pour obtenir trois nouveaux signaux $r_1$, $r_2$, $r_3$ lesquels vont à leur tour être corrélés avec les séquences pseudo-aléatoires des utilisateurs, respectivement dans trois corrélateurs 131, 132, 133. On obtient ainsi, dans ce deuxième étage, trois nouveaux signaux de décision $Z_1^2$, $Z_2^2$, $Z_3^2$ auxquels on fait correspondre trois signaux étalés par les séquences pseudo-aléatoires correspondantes, soit $s_1^2$, $s_2^2$, $s_3^2$ et ainsi de suite ...
Ce processus de suppression parallèle des interférences, contrairement au processus précédent, est bien adapté aux cas où les puissances relatives des divers utilisateurs sont de valeurs sensiblement égales.
Mais deux problèmes techniques majeurs restent là aussi à résoudre :

- régénérer le signal d'interférence (amplitude et données compte tenu des divers trajets de propagation),
- soustraire les interférences estimées (gestion du délai, mémorisation du signal bande de base reçu, ...).

Là encore, les schémas proposés dans la littérature sont donc plus théoriques que pratiques.
La présente invention a justement pour but de remédier à ces inconvénients en proposant un circuit qui répond parfaitement aux exigences de la pratique.

**Exposé de l'invention**

L'idée à la base de l'invention est de constituer un générateur de signal d'interférences correspondant au bruit d'accès multiple à partir de moyens généralement utilisés dans les émetteurs à étalement de spectre par séquence directe. En effet, pour produire un tel signal d'interférences correspondant au bruit d'accès multiple on doit partir des données reconstituées par le récepteur, données que l'on doit ré-étaler par une séquence particulière, ce qui est précisément l'opération effectuée dans un émetteur classique. Il faut cependant prévoir en outre un moyen de pondération, pour multiplier les données ré-étalées (c'est-à-dire, en pratique, le train de chips) par l'amplitude du signal reçu propre à l'utilisateur considéré, et inverser ce signal pour qu'il puisse être ensuite soustrait du signal que l'on veut débarrasser des interférences. Il faut donc compléter l'émetteur ordinaire par des moyens d'amplification et d'inversion.

Inversement, les opérations de codage différentiel et de génération de symboles, mises en oeuvre dans un émetteur classique n'ont pas de raison d'être dans un récepteur à correction d'interférences, de sorte que les moyens correspondant de l'émetteur doivent pouvoir être neutralisés.

De cette manière, on obtient un circuit à double fonction, c'est-à-dire capable de fonctionner en émetteur classique, ou en générateur de signaux de génération d'interférences correspondant au bruit d'accès multiple, avec en outre la certitude que la mise en oeuvre de tels moyens ne soulèvera aucune difficulté pratique, puisqu'il s'agit essentiellement d'une technique déjà éprouvée dans les émetteurs.

De façon précise, la présente invention a donc pour objet un circuit pour transmissions numériques à étalement de spectre par séquence directe avec génération des signaux d'interférences correspondant au bruit d'accès multiple, caractérisé en ce qu'il comprend :

> a) un premier bloc apte à recevoir sur une entrée des données et à les organiser en symboles et à produire sur une sortie un signal d'horloge lié à ces symboles,
> b) un deuxième bloc de codage différentiel des symboles délivrés par le premier bloc,
> c) un troisième bloc de multiplexage comprenant un premier groupe d'entrées reliées au bloc de codage différentiel et un deuxième groupe d'entrées aptes à recevoir deux données définissant la polarité du signal de génération d'interférences, ce bloc de multiplexage transmettant l'un ou l'autre des signaux présents sur l'un ou l'autre de ces groupes d'entrées,
> d) un quatrième bloc, d'étalement, apte à multiplier le signal qu'il reçoit du bloc de multiplexage par une séquence pseudo-aléatoire,
> e) un cinquième bloc, d'amplification-inversion, possédant une entrée de signal reliée au bloc d'étalement et possédant deux entrées de commande aptes à recevoir deux signaux de réglage du gain de l'amplification, les sorties de ce cinquième bloc délivrant soit deux signaux amplifiés et inversés, lorsque le cinquième bloc est actif, soit le signal appliqué à son entrée lorsqu'il est rendu transparent,

ce circuit étant apte à fonctionner soit en émetteur de signaux différentiels à étalement de spectre par séquence directe lorsque les premier, deuxième et quatrième blocs sont rendus actifs, le bloc de multiplexage transmettant alors les données provenant du deuxième bloc de codage différentiel, le cinquième bloc étant par ailleurs rendu transparent, soit en générateur de signal d'interférences correspondant au bruit d'accès multiple lorsque le bloc de multiplexage transmet les données appliquées sur son deuxième groupe d'entrées et lorsque les quatrième et cinquième blocs sont rendus actifs, les premier et deuxième blocs étant rendus inactifs.

**Brève description des dessins**

- la figure 1, déjà décrite, est un schéma synoptique d'un émetteur connu à étalement de spectre ;
- la figure 2, déjà décrite, est un schéma synoptique d'un récepteur connu à étalement de spectre ;
- la figure 3, déjà décrite, illustre le fonctionnement général d'un récepteur tel que celui de la figure 2 ;
- la figure 4, déjà décrite, illustre un processus connu de corrections successives d'interférences d'accès multiple,
- la figure 5, déjà décrite, illustre un processus connu de corrections parallèles d'interférences d'accès multiple,
- la figure 6 montre la structure générale d'un circuit conforme à l'invention ;
- la figure 7 montre un exemple de mise en oeuvre du circuit de l'invention dans un composant récepteur ;
- la figure 8 illustre un circuit récepteur avec correction parallèle des interférences, ce circuit utilisant plusieurs composants tels que celui de la figure 7 ;
- la figure 9 montre le signal à la sortie du premier étage du circuit de la figure 8 ;
- la figure 10 montre le signal obtenu après l'étage de correction des interférences d'accès multiple.

EP 0 917 299 B1

**Exposé détaillé de modes de réalisation**

La figure 6 est un schéma par blocs du circuit de l'invention. Tel que représenté, ce circuit, qui porte la référence générale 200, comprend :

a) un premier bloc 202 apte à recevoir sur une entrée 201 des données D et à les organiser en symboles (S) et à produire sur une sortie 203 un signal d'horloge (Hs) lié à ces symboles,
b) un deuxième bloc 204 de codage différentiel des symboles (S) délivrés par le premier bloc 202, ce deuxième bloc étant similaire au bloc 10 de la figure 1,
c) un troisième bloc 206, de multiplexage comprenant un premier groupe de deux entrées ($E_I$, $E_Q$) aptes à recevoir deux données ($D_I$, $D_Q$) définissant un signal de correction d'interférence et une deuxième entrée $E_D$ reliée à la sortie du bloc de codage différentiel 204,
d) un quatrième bloc 208, d'étalement, apte à multiplier le signal qu'il reçoit du bloc de multiplexage 206 par une séquence pseudo-aléatoire, (ce bloc comprenant donc, comme sur la figure 1, un générateur de séquence pseudo-aléatoire et un multiplieur),
e) un cinquième bloc 210, d'amplification-inversion, possédant deux entrées de commande ($E_I$, $E_Q$) aptes à recevoir deux signaux ($A_I$, $A_Q$) de réglage du gain de l'amplification, deux entrées de signal 211, 212 reliées au bloc d'étalement 208 et deux sorties de signal 213, 214 délivrant deux signaux (S(I), S(Q)).

Un tel circuit est apte à présenter deux configurations distinctes et donc deux fonctions :

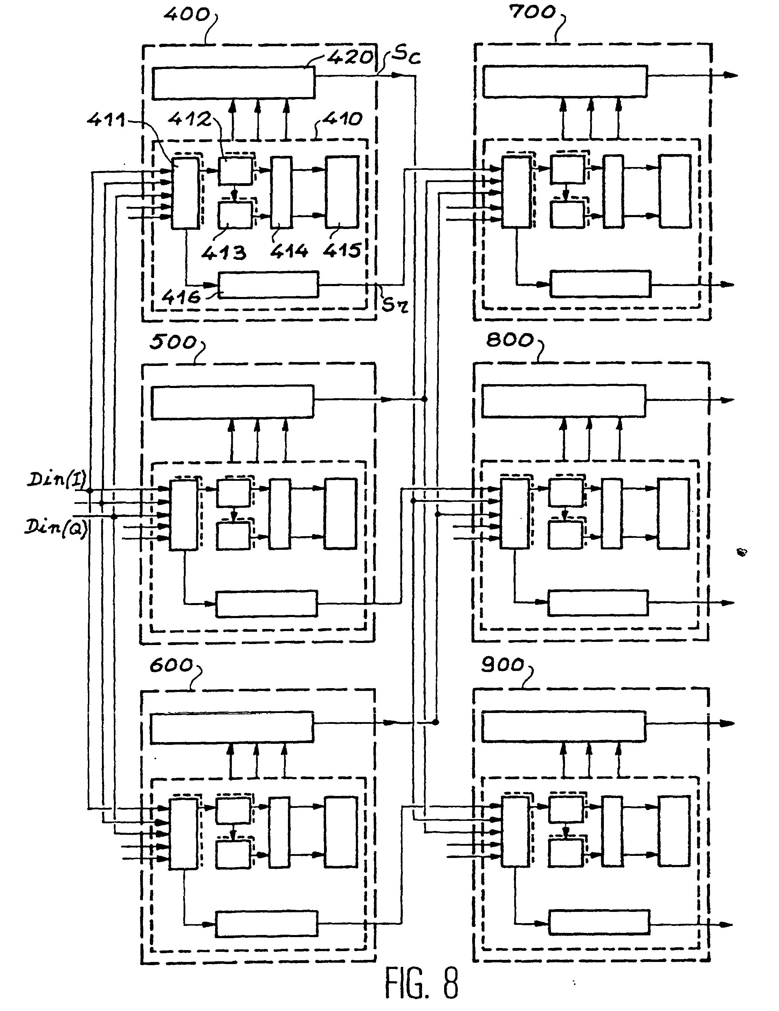

i. lorsque les blocs 202 et 204 sont rendus actifs, que le bloc de multiplexage 206 est commandé pour que sa sortie soit reliée à sa deuxième entrée, c'est-à-dire celle qui reçoit les symboles provenant du bloc 204, et que le bloc d'amplification 210 est rendu transparent, alors, l'ensemble 202-204-208 constitue un émetteur à étalement de spectre classique ;
ii. en revanche, lorsque les blocs 202 et 204 sont rendus inactifs, que le bloc de multiplexage 206 est commandé pour que ses sorties soient reliées aux entrées $E_I$, $E_Q$, et que le bloc d'amplification et d'inversion 210 est rendu actif, alors l'ensemble des moyens 206-208-210 constituent un générateur de signal d'interférences correspondant au bruit d'accès multiple. Le signal délivré par un tel générateur est directement utilisable dans un circuit de correction ultérieur (comme on le verra sur la figure 8 suivante).

Avant de décrire certains modes particuliers de réalisation de l'invention, il est utile de faire quelques rappels sur la nature des signaux traités dans les récepteurs à étalement de spectre.

On considère une porteuse de pulsation w, modulée en phase par une fonction du temps P(t). Le signal modulé peut s'écrire:

$$s(t) = A(t)\cos[wt + P(t)]$$

où A(t) est l'amplitude du signal.

Cette expression peut se développer en :

$$s(t) = A(t) \cos wt \cos P(t) - A(t) \sin wt \sin P(t)$$

En notant I(t) la partie A(t)cosP(t), qui est en phase avec la porteuse et Q(t) la partie A(t)sinP(t), qui est en quadrature avec la porteuse, on peut encore écrire ce dernier signal sous la forme :

$$s(t) = I(t) \cos wt - Q(t) \sin wt$$

Il est commode alors de considérer le signal complexe S(t) :

$$S(t) = U(t) \exp(jwt)$$

avec U(t)=I(t)+jQ(t). Le signal vrai s(t) correspond alors à la partie réelle du signal complexe S(t).

Le traitement du signal s(t) peut donc s'effectuer par le double traitement des parties I(t) et Q(t) qu'on notera plus simplement, par la suite, I et Q.

Les processeurs qui traitent de tels signaux reçoivent en général, sur deux entrées distinctes, les signaux I et Q. Ces signaux sont obtenus en multipliant le signal de réception par une onde soit en phase avec la porteuse soit en quadrature avec celle-ci. Les processeurs effectuent ensuite divers traitements selon les modulations exploitées. On trouve ainsi, dans le cas de la modulation différentielle de phase, des traitements qui consistent à former la somme ou la différence de produits d'échantillons retardés ou non, comme par exemple $(I_k I_{k-1} + Q_k Q_{k-1})$ et $Q_k I_{k-1} - I_k Q_{k-1}$ où k désigne le rang d'un échantillon.

La première expression est dite "Dot" et la seconde "Cross" dans la littérature sur ce sujet. Ces appellations viennent de ce que le premier signal est du type "produit intérieur" ou "produit scalaire" entre deux grandeurs, traditionnellement noté par un point ("Dot" en anglais), tandis que le second est du type "produit extérieur" ou "produit vectoriel" traditionnellement noté par une croix ("Cross").

On peut montrer que le produit d'un échantillon de rang k du signal s(t), soit s(k), par l'échantillon antérieur conjugué, soit s*(k-1), produit qui est calculé dans le récepteur pour démoduler le signal (cf multiplieur 24 sur la figure 2), est, à une rotation de phase fixe près, de la forme :

$$Dot(k) + jCross(k).$$

Le signal Dot permet la détermination du déphasage entre deux symboles successifs, alors que les signaux Dot et Cross, considérés ensemble, permettent de déterminer le nombre entier de fois $\pi/2$ du déphasage entre symboles successifs. Ces signaux Dot et Cross permettent donc la démodulation correcte et sans ambiguïté lorsqu'une modulation différentielle de phase a été utilisée à l'émission.

Un récepteur de signaux à étalement de spectre forme donc, d'abord, les parties en phase et en quadrature I et Q et effectue ensuite un filtrage adapté sur chacun de ces signaux. A partir des échantillons obtenus, le récepteur calcule les signaux Dot et Cross et, à partir de là, restitue l'information véhiculée par le signal reçu.

Le document FR-A-2 742 014 décrit un récepteur mettant en oeuvre cette technique. Sur la figure 4 de ce document est représenté un récepteur comprenant deux voies similaires, l'une traitant la partie I en phase et l'autre la partie Q en quadrature. La première voie de traitement numérique de la partie I en phase avec la porteuse, comprend :

i) des premiers moyens numériques 50(I) aptes à remplir une première fonction de filtrage adapté à la séquence pseudoaléatoire utilisée à l'émission,
ii) des premiers moyens numériques 60(I) aptes à remplir une première fonction de retard.

Le circuit comprend encore une seconde voie de traitement numérique recevant la seconde partie Q du signal reçu, cette seconde partie étant en quadrature de phase avec la porteuse. Cette seconde voie comprend, comme la première :

i) des seconds moyens numériques 50(Q) aptes à remplir une seconde fonction de filtrage adapté à ladite séquence pseudoaléatoire,
ii) des seconds moyens numériques 60(Q) aptes à remplir une fonction de retard.

Le circuit décrit dans ce document comprend encore un circuit de multiplication 70 possédant :

- deux premières entrées, l'une reliée à la sortie des premiers moyens numériques 50(I) de filtrage et recevant un premier signal filtré $I_k$ et l'autre reliée à la sortie des premiers moyens aptes à remplir la fonction de retard 60(I) et recevant un premier signal filtré-retardé $I_{k-1}$,
- deux secondes entrées, l'une reliée à la sortie des seconds moyens numériques 50(Q) de filtrage et recevant un second signal filtré $Q_k$ et l'autre reliée à la sortie des seconds moyens aptes à remplir la fonction retard 60(Q) et recevant un second signal filtré-retardé $Q_{k-1}$,
- des moyens pour calculer les deux produits directs entre signaux filtrés et filtrés-retardés de la première et de la seconde voies à savoir $I_k I_{k-1}$ et $Q_k Q_{k-1}$, et les deux produits croisés entre signal filtré d'une voie et signal filtré-retardé de l'autre voie, à savoir $Q_k I_{k-1}$, et $I_k Q_{k-1}$,
- des moyens pour calculer la somme des produits directs, soit $I_k I_{k-1} + Q_k Q_{k-1}$ et la différence des produits croisés, soit $Q_k I_{k-1} - I_k Q_{k-1}$.

Le circuit décrit dans ce document comprend encore un circuit d'intégration et de régénération d'horloge 80 recevant la somme des produits directs et la différence des produits croisés. Ce circuit comprend encore un moyen numérique de programmation 90 contenant des informations aptes à programmer notamment les premiers et seconds moyens de filtrage 50(I), 50(Q).

Les deux voies comprennent en outre un premier et un second circuits de mise en forme et de sommation 95(I), 95(Q) disposés devant, respectivement, les premiers et seconds moyens de filtrage 50(I), 50(Q).

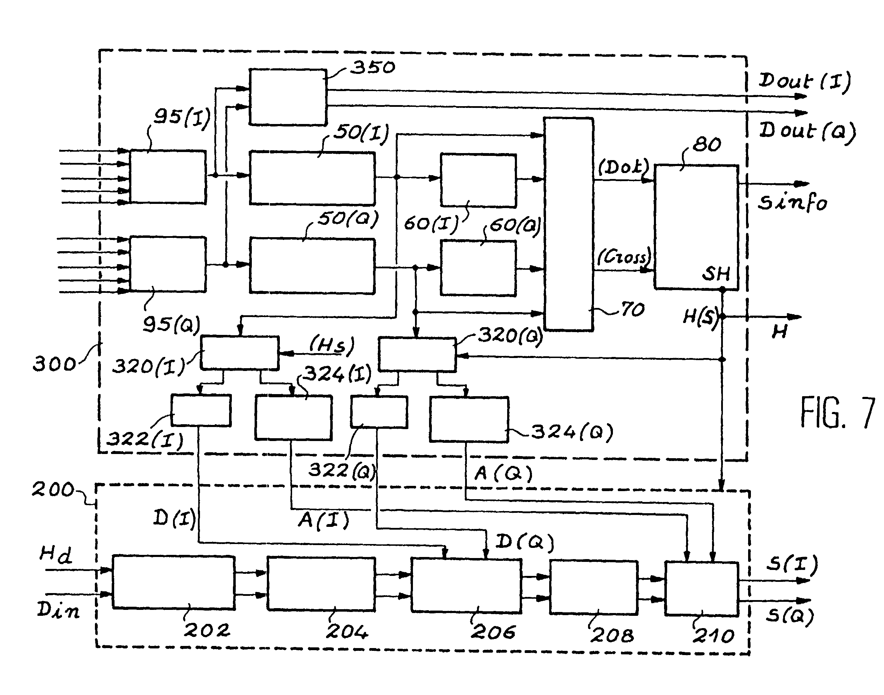

La figure 7 annexée représente un tel circuit récepteur, sous la référence générale 300, mais de manière un peu simplifiée, avec en outre le circuit de l'invention référencé 200. Dans la partie récepteur 300 on retrouve les deux sommateurs 95I, 95Q, deux filtres adaptés 50I et 50Q, deux circuits retards 60(I), 60(Q), un démodulateur différentiel 70, un circuit 80 de calcul de l'horloge-symbole Hs.

Le récepteur comprend en outre deux registres 320I, 320Q, deux circuits détecteurs de signe 322(I), 322(Q) délivrant deux données D(I), D(Q), deux circuits détecteurs de valeur absolue 324(I), 324(Q), délivrant deux signaux A(I), A(Q). Par ailleurs, le circuit représenté comprend un circuit retard 350 qui peut être, en pratique, une mémoire FIFO ("First In-First Out"), cette mémoire recevant les deux données en bande de base extraites des sommateurs 302 (I), 302(Q) et les adressant à l'entrée d'un étage suivant sous forme de signaux Dout(I), Dout(Q). En pratique, la mémoire FIFO 350 peut être dédoublée en deux mémoires FIFO, l'une pour les signaux de la voie I, l'autre pour les signaux de la voie Q.

Pour le fonctionnement détaillé des sommateurs 95(I), 95(Q), des filtres adaptés 50(I), 50(Q), des circuits à retard 60(I), 60(Q), du démodulateur 70, du circuit de calcul de l'horloge symbole 80, on pourra se reporter au document FR-A-2 742 014. Ce document décrit en particulier le fonctionnement du circuit 80 permettant, à partir des signaux Dot et Cross, de reconstruire l'horloge symbole Hs. L'essentiel ici est de souligner que le récepteur 300 délivre les données reconstituées D(I), D(Q), ainsi que les amplitudes A(I), A(Q) des signaux propres à l'utilisateur considéré. Ce sont ces deux types d'information qui sont adressées au circuit 200 objet de la présente invention. Les données D(I), D(Q) sont adressées au bloc multiplexeur 206, tandis que les amplitudes A(I), A(Q) sont adressées au circuit d'amplification 210, dont elles déterminent le gain.

Les sorties S(I), S(Q) peuvent être reliées aux entrées des sommateurs d'un étage suivant, lesquels sommateurs reçoivent également les signaux en bande de base délivrés par le moyen à retard 350 (FIFO), ce circuit retardant les données initiales en bande de base afin de les synchroniser avec le signal de correction d'interférence.

Les circuits de la figure 7 peuvent être intégrés dans un même composant qui contiendra alors l'ensemble des fonctionnalités nécessaires à la mise en oeuvre d'une transmission numérique par étalement de spectre avec génération des interférences correspondant au bruit d'accès multiple. Il suffit en effet de grouper de tels composants par étages et de mettre ces étages en cascade pour obtenir l'ensemble souhaité. La figure 8 montre ainsi un récepteur fonctionnant avec trois utilisateurs et effectuant une suppression des interférences de type parallèle. Ce circuit est construit avec six composants identiques, trois constituant un premier étage, à savoir les composants 400, 500, 600, les trois autres, à savoir 700, 800, 900, constituant un second étage. Les composants ont tous même structure et comprennent, par exemple pour le composant 400 :

    i. un récepteur 410 constitué d'un bloc sommateur 411, de deux corrélateurs 412, 413 à la fois pour la voie I (en traits pleins) et pour la voie Q (en traits interrompus), d'un démodulateur 414 unique pour les deux voies I et Q et délivrant les signaux Dot et Cross, d'un circuit de détection de pic et de régénération d'horloge 415, et d'une mémoire FIFO 416,
    ii. un générateur de signal d'interférences 420, conforme au schéma de la figure 6.

Le composant 400 a une sortie de correction des interférences Sc reliée aux entrées des deux composants 800 et 900 du deuxième étage (pour la correction) alors que la sortie Sr de la mémoire FIFO est reliée à l'entrée du composant 700 du second étage. De même pour les composants 500 et 600, dont les sorties du générateur sont reliées aux entrées des composants (700, 900) (700, 800) et les sorties retardées aux entrées des composants 800 et 900.

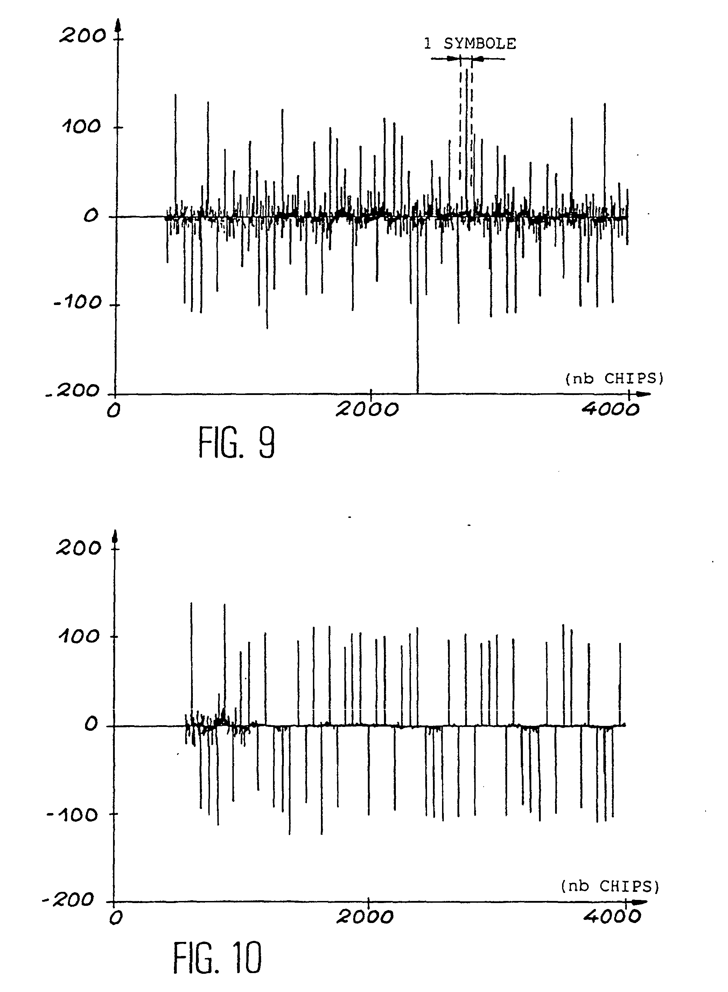

Les figures 9 et 10 illustrent les résultats obtenus avec un tel circuit. La figure 9 montre le signal Dot à la sortie du premier étage (par exemple à la sortie du circuit 414). Un tel signal, d'une manière générale, comprend une suite de pics tantôt positifs, tantôt négatifs, selon la valeur de l'information binaire transmise. L'intervalle entre deux pics consécutifs correspond à la durée Ts d'un symbole. On voit, sur la figure 9, une série de tels pics, mélangés à des pics parasites provenant des interférences avec les deux autres utilisateurs.

Sur la figure 10, on voit le signal Dot du même utilisateur mais pris après le second étage, c'est-à-dire après suppression des interférences. L'amélioration est spectaculaire.

**Revendications**

**1.** Circuit pour transmissions numériques à étalement de spectre par séquence directe, avec génération d'un signal d'interférences correspondant à un bruit d'accès multiple comprenant

a) un premier bloc (202) apte à recevoir sur une entrée des données et à les organiser en symboles et à produire sur une sortie un signal d'horloge (Hs) lié à ces symboles,

b) un deuxième bloc (204) de codage différentiel des symboles délivrés par le premier bloc (202),

c) un troisième bloc (206) de multiplexage comprenant un premier groupe d'entrées reliées au bloc de codage différentiel (204) et un deuxième groupe d'entrée (E(I), E(Q)) aptes à recevoir deux données (D(I), D(Q)) définissant la polarité du signal d'interférences, ce bloc de multiplexage (206) transmettant l'un ou l'autre des signaux présents sur l'un ou l'autre des deux groupes d'entrée,

d) un quatrième bloc (208), d'étalement, apte à multiplier le signal qu'il reçoit du bloc de multiplexage (206) par une séquence pseudo-aléatoire,

e) un cinquième bloc (210), d'amplification-inversion possédant une entrée de signal reliée au bloc d'étalement et possédant deux entrées de commande (E(I), E(Q)) aptes à recevoir deux signaux (A(I), A(Q)) de réglage du gain de l'amplification, les sorties de ce cinquième bloc délivrant soit deux signaux amplifiés et inversés ($S_I$, $S_Q$) lorsque ce cinquième bloc (210) est actif, soit le signal appliqué à son entrée lorsqu'il est rendu transparent,

ce circuit étant apte à fonctionner soit en émetteur de signaux différentiels à étalement de spectre par séquence directe lorsque les premier (202), deuxième (204) et quatrième (208) blocs sont rendus actifs, le bloc de multiplexage (206) transmettant alors les données provenant du bloc de codage différentiel (204), le cinquième (210) bloc étant rendu transparent, soit en générateur de signal d'interférences correspondant au bruit d'accès multiple lorsque le bloc de multiplexage transmet les données appliquées sur le deuxième groupe d'entrée et lorsque les quatrième (208) et cinquième (210) blocs sont rendus actifs, les blocs premier (202) et deuxième (204) blocs étant rendus inactifs.

2. Circuit selon la revendication 1, **caractérisé par le fait qu'**il est disposé dans un composant rassemblant, d'une part, un récepteur différentiel de signaux à étalement de spectre par séquence directe (300) et d'autre part, ledit circuit (200), le récepteur (300) délivrant les données ($D_I$, $D_Q$) appliquées au troisième bloc (206) de multiplexage dudit circuit (200) ainsi que les signaux ($A_I$, $A_Q$) de réglage du gain de l'amplification effectuée par le cinquième bloc (210).

**Patentansprüche**

1. Schaltung zur digitalen Direktsequenz-Spreizspektrumsübertragung mit einer einem Vielfachzugriffs-Geräusch entsprechenden Interterenzensignalgeneration, umfassend:

a) einen ersten Block (202), fähig auf einem Eingang Daten zu empfangen und sie als Symbole zu organisieren und auf einem Ausgang ein mit diesen Symbolen verknüpftes Taktsignal (Hs) zu erzeugen,

b) einen zweiten Block (204) zur Differentialcodierung der durch den ersten Block (202) gelieferten Symbole,

c) einen dritten oder Multiplexierungsblock (206), eine erste Gruppe von Eingängen umfassend, verbunden mit dem Differentialcodierungs-Block (204), sowie eine zweite Gruppe von Eingängen (E(I), E(Q)), fähig zwei Daten (D(I), D(Q) zu empfangen, welche die Polarität des Interferenzensignals definieren, wobei dieser Multiplexierungsblock (206) das eine oder das andere der in der einen oder der anderen der beiden Eingangsgruppen präsenten Signale überträgt,

d) einen vierten oder Spreizblock (208), fähig das Signal, das er von dem Multiplexierungsblock (206) erhält, mit einer Pseudozufallssequenz zu multiplizieren,

e) einen fünften oder Verstärkungs-Inversions-Block (210), einen mit dem Spreizblock verbundenen Signaleingang umfassend sowie zwei Steuerungseingänge (E(I), E(Q)), fähig zwei Signale (A(I), A(Q)) zur Regelung des Verstärkungsgewinns zu empfangen, wobei die Ausgänge dieses fünften Blocks entweder zwei verstärkte und invertierte Signale ($S_I$, $S_Q$) liefern, wenn dieser fünfte Block (210) aktiv ist, oder das an seinen Eingang angelegte Signal, wenn er durchlässig gemacht ist,

wobei diese Schaltung fähig ist, entweder als Sender von Direktsequenz-Spreizspektrum-Differentialsignalen zu arbeiten, wenn der erste (202), der zweite (204) und der vierte (208) Block aktiv gemacht sind, der Multiplexierungsblock (206) dann die von dem Differentialcodierungs-Block (204) stammenden Daten überträgt und der fünfte Block (210) durchlässig gemacht ist, oder als Generator des dem Vietfachzugriffs-Geräusch entsprechenden Interferenzensignals zu arbeiten, wenn der Multiplexierungsblock die in die zweite Eingangsgruppe eingespeisten Signale überträgt und wenn der vierte (208) und der fünfte (210) Block aktiv gemacht sind, wobei der erste (202) und der zweite (204) Block inaktiv gemacht sind.

**2.** Schaltung nach Anspruch 1, **dadurch gekennzeichnet, dass** sie in einem Bauteil enthalten ist, das einerseits einem Direktsequenz-Spreizspektrumsignal-Differentialempfänger (300) und andererseits der genannten Schaltung (200) gleicht, wobei der Empfänger (300) die Daten ($D_I$, $D_Q$) liefert, eingespeist in den dritten oder Multiplexierungsblock (206) der genannten Schaltung (200), sowie die Signale ($A_I$, $A_Q$) zur Regelung des Verstärkungsgewinns, ausgeführt durch den fünften Block (210).

**Claims**

**1.** Circuit for direct sequence spread spectrum digital transmissions with the generation of interference signals corresponding to multiple access noise, comprising:

a) a first module (202) able to receive on one input data and organize them into symbols and produce on an output a clock signal linked with said symbols,
b) a second module (204) for the differential coding of the symbols supplied by the first module (202),
c) a third multiplexing module (206) incorporating a first group of inputs connected to the differential coding module (204) and a second group of inputs (E(I), E(Q)) able to receive two data items (D(I), D(Q)) defining the polarity of the interference generation signal, said multiplexing module (206) transmitting one or other of the signals present on one or other of said input groups,
d) a fourth spreading module (208) able to multiply the signal which it receives from the multiplexing module (206) by a pseudorandom sequence,
e) a fifth amplification-inversion module (210) having a signal input connected to the spreading module and having two control inputs (E(I), E(Q)) able to receive two signals (A(I), A(Q)) for regulating the amplification gain, the outputs of said fifth module supplying either two amplified and inverted signals ($S_I$, $S_Q$) when the fifth module (210) is active, or the signal applied to its input when it is rendered transparent,

said circuit being able to operate either as a direct sequence spread spectrum differential signal emitter when the first (202), second (204) and fourth (208) modules are rendered active, the multiplexing module (206) then transmitting data coming from the second differential coding module (204), the fifth module (210) also being rendered transparent, or as a generator of interference signals corresponding to the multiple access noise when the multiplexing module transmits the data applied to its second group of inputs and when the fourth (208) and fifth (210) modules are rendered active, the first (202) and second (204) modules being rendered inactive.

**2.** Circuit according to claim 1, **characterized in that** it is placed in a component integrating on the one hand a direct sequence spread spectrum differential signal (300) and on the other said circuit (200), the receiver (300) supplying data (D, $D_Q$) applied to the third multiplexing module (206) of said circuit (200), as well as signals ($A_I$, $A_Q$) for controlling the amplification gain performed by the fifth module (210).

FIG. 1

FIG. 2

FIG. 3

FIG. 4

FIG. 6

FIG. 5

FIG. 7

FIG. 8

1 SYMBOLE

FIG. 9

FIG. 10